# EUROPEAN PATENT APPLICATION

(11) **EP 2 073 105 A1**
(43) Date of publication of application: **24.06.2009**
(21) Application number: 08003432.5
(22) Date of filing: 26.02.2008
(51) Int. Cl.: G06F 3/042

(54) **Optical contact controlled medium display**

(30) Priority: 19.12.2007 TW 96148812
(71) Applicant: Li, Shu-Fen, Taiwan (JP)
(72) Inventor: Li, Shu-Fen, Taiwan (JP)
(74) Representative: Reichel, Wolfgang

(57) **Abstract**

An optical contact controlled medium display includes a computing device (1) containing at least one information, an indication device (2) connected to the computing device via a video signal unit (4) to indicate the at least one information of the computing device, and an optical position detection device (3) mounted on the indication device and electrically connected to the computing device. Thus, when the indication device is provided with a touch point (24), the optical position detection device detects a position signal of the touch point from the indication device and transmits the position signal of the touch point to the computing device so that the computing device can compute a position of the touch point.

## Description

The present invention relates to a display and, more particularly, to an optical contact controlled medium display with a digital medium interaction function.

A conventional infrared contact screen is not interrupted by an electric current, a voltage and a static electricity during operation, so that the infrared contact screen has a higher stability and reliability, thereby facilitating a user operating the infrared contact screen. In addition, the infrared contact screen has a simplified construction to reduce its price. However, the infrared contact screen includes an infrared frame mounted on a CRT monitor or a liquid crystal display so that the operation field of the infrared contact screen is limited.

In accordance with the present invention, there is provided an optical contact controlled medium display, comprising a computing device containing at least one information, an indication device connected to the computing device via a video signal unit to indicate the at least one information of the computing device, and an optical position detection device mounted on the indication device and electrically connected to the computing device. Thus, when the indication device is provided with a touch point, the optical position detection device detects a position signal of the touch point from the indication device and transmits the position signal of the touch point to the computing device so that the computing device can compute a position of the touch point.

Preferably, the video signal unit is a video graphics array.

Preferably, the indication device has a rectangular shape.

Preferably, the optical position detection device is an infrared contact screen.

Preferably, the optical position detection device includes a plurality of transmitters and a plurality of receivers aligning with the transmitters respectively.

Preferably, the transmitters and the receivers of the optical position detection device are arranged in a matrix shape.

Preferably, the indication device is a planar television.

Preferably, the indication device includes a projection unit connected to the computing device via the video signal unit to receive the at least one information of the computing device by transmission of the video signal unit, and an imaging unit aligning with the projection unit to indicate the at least one information projected by the projection unit.

Preferably, the imaging unit of the indication device includes a glass aligning with the projection unit, and an imaging film mounted on the glass.

Preferably, the computing device is a computer.

The primary objective of the present invention is to provide an optical contact controlled medium display, wherein when the indication device is provided with a touch point, the optical position detection device detects a position signal of the touch point from the indication device and transmits the position signal of the touch point to the computing device so that the computing device can compute the position of the touch point.

Another objective of the present invention is to provide an optical contact controlled medium display that provides an infrared contact screen (the optical position detection device) that is performed on the imaging film of the indication device or on a planar television.

A further objective of the present invention is to provide an optical contact controlled medium display, wherein the user can control the computing device by his finger or an opaque object to achieve the effect of a digital medium interaction performance by design of a software.

Further benefits and advantages of the present invention will become apparent after a careful reading of the detailed description with appropriate reference to the accompanying drawings.

In the drawings:
Fig. 1 is a side view of an optical contact controlled medium display in accordance with the preferred embodiment of the present invention.
Fig. 2 is a locally enlarged rear view of the optical contact controlled medium display as shown in Fig. 1.
Fig. 3 is a circuit layout of the optical contact controlled medium display as shown in Fig. 1.
Fig. 4 is a side view of an optical contact controlled medium display in accordance with another preferred embodiment of the present invention.

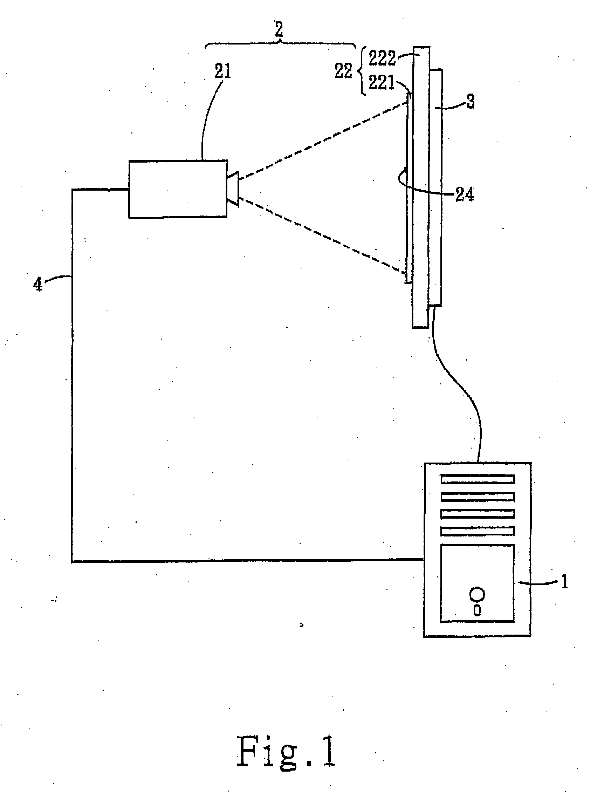

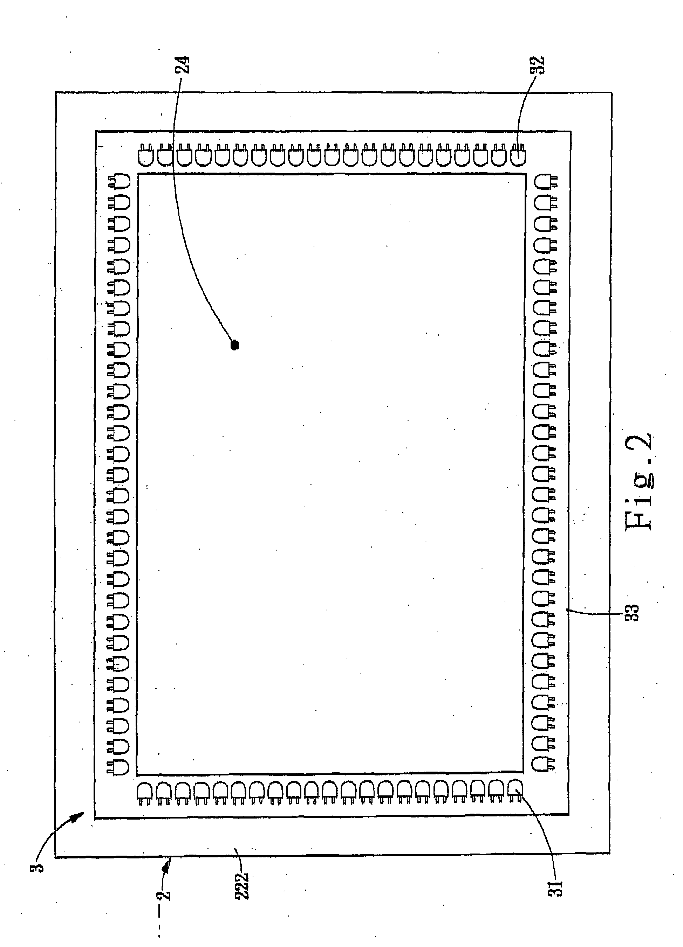

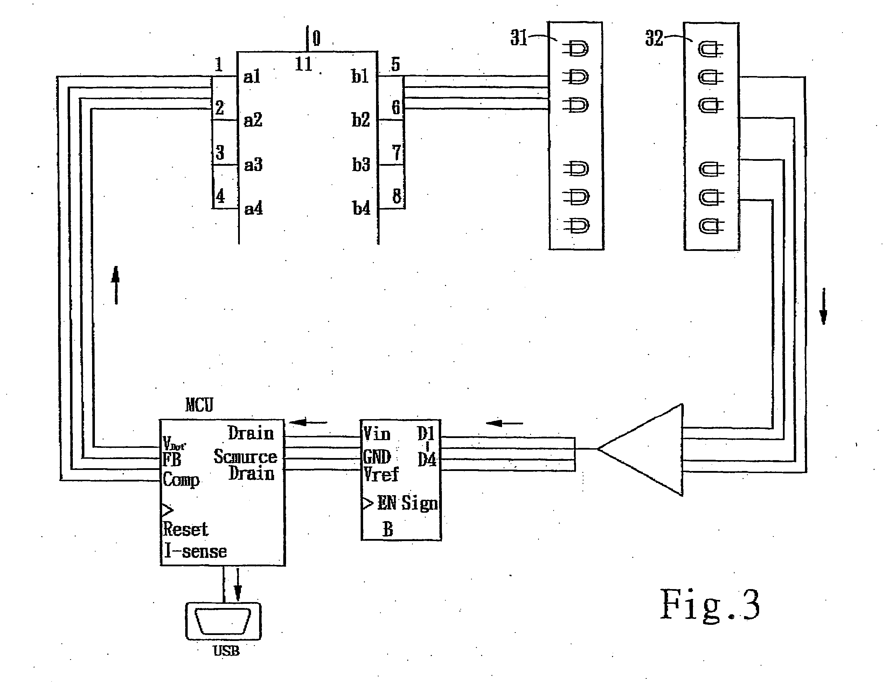

Referring to the drawings and initially to Figs. 1-3, an optical contact controlled medium display in accordance with the preferred embodiment of the present invention comprises a computing device 1 containing at least one information, an indication device 2 connected to the computing device 1 via a video signal unit 4 to indicate the at least one information of the computing device 1, and an optical position detection device 3 mounted on the indication device 2 and electrically connected to the computing device 1. Thus, when the indication device 2 is provided with a touch point 24, the optical position detection device 3 detects a position signal of the touch point 24 from the indication device 2 and transmits the position signal of the touch point 24 to the computing device 1 so that the computing device 1 can compute a position of the touch point 24.

In the preferred embodiment of the present invention, the computing device 1 is a computer. The indication device 2 has a rectangular shape. The video signal unit 4 is a video graphics array (VGA).

The indication device 2 includes a projection unit 21 connected to the computing device 1 via the video signal unit 4 to receive the at least one information of the computing device 1 by transmission of the video signal unit 4, and an imaging unit 22 aligning with the projection unit 21 to indicate the at least one information projected by the projection unit 21. The imaging unit 22 of the indication device 2 includes a glass 221 aligning with the projection unit 21 and an imaging film 222 mounted on the glass 221. Thus, the projection unit 21 of the indication device 2 receives the at least one information of the computing device 1 by transmission of the video signal unit 4 and then projects the at least one information of the computing device 1 onto the imaging film 222 which is mounted on the glass 221 of the imaging unit 22.

The optical position detection device 3 is an infrared contact screen and is located at a periphery of the indication device 2. Preferably, the optical position detection device 3 is located at a periphery of the imaging film 222 of the indication device 2. The optical position detection device 3 includes a plurality of transmitters 31 and a plurality of receivers 32 aligning with the transmitters 31 respectively. The transmitters 31 and the receivers 32 of the optical position detection device 3 are arranged in a matrix shape. Each of the transmitters 31 and the receivers 32 of the optical position detection device 3 is made of a light emitting diode (LED) to emit or receive infrared rays. The optical position detection device 3 consists of four strip-shaped printed circuit boards (PCB) 33 for soldering the transmitters 31 and the receivers 32. The printed circuit boards 33 of the optical position detection device 3 are located at the periphery of the imaging film 222 of the indication device 2 and are arranged in a rectangular shape. In such a manner, the transmitters 31 and the receivers 32 of the optical position detection device 3 form a rectangular infrared net on the imaging film 222 of the indication device 2.

Thus, when the indication device 2 is provided with a touch point 24, the optical position detection device 3 detects a position signal of the touch point 24 from the indication device 2 and transmits the position signal of the touch point 24 to the computing device 1 so that the computing device 1 can compute the position of the touch point 24. In practice, when a user's finger (or an opaque object) touches a touch point 24 on the indication device 2, the user's finger stops two intersecting perpendicular infrared rays which pass through the touch point 24 to interrupt the connection between the respective transmitters 31 and the respective receivers 32 of the optical position detection device 3 so that the computing device 1 can compute the position of the touch point 24, and the indication device 2 can show the information. Thus, the user can control the computing device 1 by his finger or an opaque object to achieve the effect of a digital medium interaction performance by design of a software.

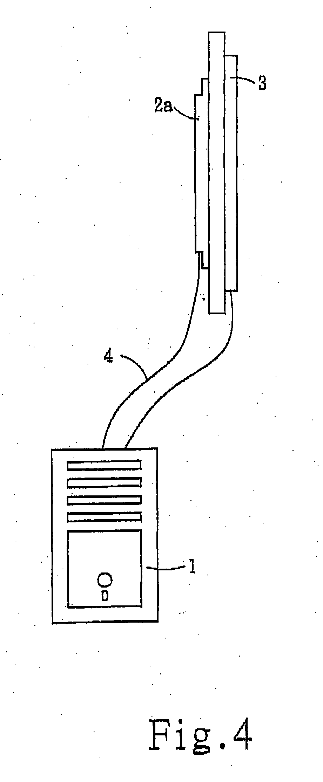

As shown in Fig. 4, the indication device 2a is a planar television. Thus, the indication device 2a is connected to the computing device 1 via the video signal unit 4 to indicate the at least one information of the computing device 1.

Accordingly, when the indication device 2 is provided with a touch point 24, the optical position detection device 3 detects a position signal of the touch point 24 from the indication device 2 and transmits the position signal of the touch point 24 to the computing device 1 so that the computing device 1 can compute the position of the touch point 24. In addition, the optical contact controlled medium display provides an infrared contact screen (the optical position detection device) that is performed on the imaging film 222 of the indication device 2 or on a planar television. Further, the user can control the computing device 1 by his finger or an opaque object to achieve the effect of a digital medium interaction performance by design of a software.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. An optical contact controlled medium display, comprising:
a computing device (1) containing at least one information;
an indication device (2) connected to the computing device via a video signal unit (4) to indicate the at least one information of the computing device (1);
an optical position detection device (3) mounted on the indication device (2) and electrically connected to the computing device (1).

2. The optical contact controlled medium display in accordance with claim 1, wherein when the indication device is provided with a touch point (24), the optical position detection device detects a position signal of the touch point from the indication device (2) and transmits the position signal of the touch point to the computing device so that the computing device can compute a position of the touch point (24).

3. The optical contact controlled medium display in accordance with claim 1, wherein the video signal unit is a video graphics array.

4. The optical contact controlled medium display in accordance with claim 1, wherein the indication device has a rectangular shape.

5. The optical contact controlled medium display in accordance with claim 1, wherein the optical position detection device is an infrared contact screen.

6. The optical contact controlled medium display in accordance with claim 1, wherein the optical position detection device includes a plurality of transmitters and a plurality of receivers aligning with the transmitters respectively.

7. The optical contact controlled medium display in accordance with claim 6, wherein the transmitters and the receivers of the optical position detection device are arranged in a matrix shape.

8. The optical contact controlled medium display in accordance with claim 1, wherein the indication device is a planar television.

9. The optical contact controlled medium display in accordance with claim 1, wherein the indication device includes:
a projection unit connected to the computing device via the video signal unit to receive the at least one information of the computing device by transmission of the video signal unit;
an imaging unit aligning with the projection unit to indicate the at least one information projected by the projection unit.

10. The optical contact controlled medium display in accordance with claim 9, wherein the imaging unit of the indication device includes:
a glass aligning with the projection unit;
an imaging film mounted on the glass.
